Europäisches Patentamt

European Patent Office

Office européen des brevets

(19)

(11) **EP 0 609 147 B1**

(12) **FASCICULE DE BREVET EUROPEEN**

(45) Date de publication et mention
de la délivrance du brevet:
**11.03.1998 Bulletin 1998/11**

(51) Int Cl.⁶: **G01N 29/02**

(21) Numéro de dépôt: **94400171.8**

(22) Date de dépôt: **27.01.1994**

(54) **Appareil et procédé de mesure de caractéristiques physiques d'un liquide par voie acoustique**

Vorrichtung und Verfahren zur akustischen Messung der physikalischen Eigenschaften einer Flüssigkeit

Apparatus and method for acoustic measurement of the physical characteristics of a liquid

(84) Etats contractants désignés:
**DE FR GB**

(30) Priorité: **27.01.1993 FR 9300769**

(43) Date de publication de la demande:
**03.08.1994 Bulletin 1994/31**

(73) Titulaire: **SOCIETE NATIONALE D'ETUDE ET DE CONSTRUCTION DE MOTEURS D'AVIATION, "S.N.E.C.M.A."**
**F-75015 Paris (FR)**

(72) Inventeurs:
  • **Chatellier, Jean-Yves François Roger**
    **F-94110 Arcueil (FR)**
  • **Fachinetti, Jean-Louis**
    **F-91070 Bondoufle (FR)**

(74) Mandataire: **Berrou, Paul et al**
**S.N.E.C.M.A.**
**Service des Brevets**
**Boîte Postale 81**
**91003 Evry Cedex (FR)**

(56) Documents cités:
    EP-A- 0 364 168          EP-A- 0 419 094
    EP-A- 0 483 491          EP-A- 0 544 064
    US-A- 3 359 788

  • ULTRASONIC SYMPOSIUM PROCEEDINGS no.
    74 , Novembre 1974 , NEW YORK pages 716 - 719
    W.SACHSE 'Density determination of a fluid
    inclusion in an elastic solid from ultrasonic
    spectroscopy measurement'

## Description

L'invention concerne un appareil et un procédé de mesure de caractéristiques physiques d'un liquide par voie acoustique, c'est-à-dire qu'un signal ultrasonore ou éventuellement sonore est utilisé pour mesurer par exemple la masse volumique, l'atténuation acoustique, la vitesse de propagation du son ou le module d'élasticité du liquide.

L'article de W. Sachse intitulé "Density determination of a fluid inclusion in an elastic solid from ultrasonic spectroscopy measurements" paru à la page 716 de "1974 Ultrasonics Symposium Proceedings", IEEE, cat-74 CHO 896-ISU, décrit une cellule enclosant une cavité cylindrique emplie d'un liquide dont la densité doit être déterminée. Une onde est émise à partir de la face extérieure de la cellule et subit des réflexions dès qu'elle atteint la surface de la cavité, soit pour y entrer ou en sortir. La densité est donnée par une formule qui fait intervenir les intensités des trois premières réflexions vers la face de départ de l'onde (pour Lesquelles, respectivement, l'onde ne traverse pas la cavité et la traverse deux et quatre fois) ainsi que des temps écoulés jusqu'à ce que les deux premières réflexions reviennent sur la face d'émission.

L'invention est relative à un appareil comme definie dans la revendication 1, et un procédé comme defini dans la revendication 4, perfectionnés et plus compliqués dont l'avantage essentiel est de permettre de mesurer d'autres caractéristiques du liquide, et avec une bonne précision.

L'appareil de mesure est caractérisé par une paire de transducteurs acoustiques montés en opposition et un assemblage composé d'une couche d'un premier matériau solide devant un des transducteurs, d'une couche d'un second matériau solide devant l'autre transducteur et d'une cavité emplie du liquide mesuré entre les deux couches. Un des transducteurs au moins est apte à l'émission d'ondes sonores ou ultrasonores, et les deux sont aptes à la réception de ces ondes.

L'une des couches soit formée par une pastille logée dans un boîtier délimitant la cavité et dont l'autre couche fasse partie et en ce que les transducteurs soient encastrés dans le boîtier.

Le procédé consiste à émettre une onde acoustique par un des transducteurs, à recueillir et mesurer par ledit transducteur les réflexions d'onde réfléchies aux interfaces entre la cavité et chacune des deux couches et par l'autre transducteur l'onde directe et l'onde réfléchie une fois sur chacune des interfaces.

L'invention va maintenant être décrite plus en détail à l'aide du commentaire des figures suivantes annexées à titre illustratif et non limitatif :

- la figure 1 représente une réalisation de l'invention en coupe diamétrale, et

- la figure 2 représente une autre réalisation de l'invention.

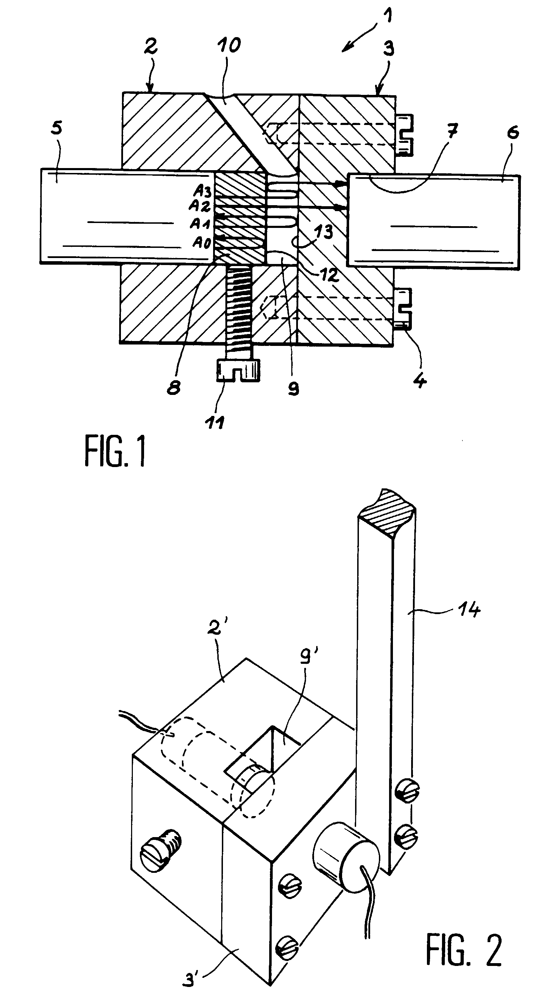

L'appareil de la figure 1 comprend un boîtier 1 composé d'une paroi 2 cylindrique et évidée en son centre et un couvercle 3 assemblé par des vis telles que 4 à une extrémité longitudinale de la paroi ; un transducteur d'émission 5 (apte également à la réception) est inséré dans l'évidement central de la paroi 2 sur une partie de la longueur de celui-ci et un transducteur de réception 6 est logé de manière opposée au précédent, dans l'axe de l'évidement, et enfoncé dans un évidement borgne du couvercle 3 de manière à toucher sa paroi de fond.

Une pastille 8 de magnésium est située dans l'évidement de la paroi 2 et devant le transducteur d'émission 5, en le touchant. Une partie de l'évidement n'est cependant pas occupée et forme une cavité 9 cylindique entre la pastille 8 et le couvercle 3. Un perçage 10 qui traverse obliquement la paroi 2 permet d'accéder à la cavité 9 et de la remplir du liquide à mesurer. Le montage de l'appareil s'effectue en plaçant la pastille 8 à une position qu'on mesure avec précision, et qui peut éventuellement être définie par des butées d'arrêt dans l'évidement, après quoi une vis de pression 11 engagée radialement à travers la paroi 2 bloque la pastille 8 à la position choisie.

Les étapes suivantes du montage consistent à placer les transducteurs 5 et 6 dans leurs évidements et à fixer le couvercle 3 sur la paroi 2. On désigne par 12 et par 13 les limites ou les interfaces de la cavité 9 avec respectivement la pastille 8 et le couvercle 3.

La figure 2 illustre une réalisation semblable par son principe mais où la cavité 9, qui était entièrement entourée par la paroi 2 à l'exception du débouché représenté par le perçage 10 dans la réalisation précédente, est remplacée par une cavité 9' ouverte à ses extrémités et qui est entourée sur trois côtés par une paroi 2', qui forme un quadrilatère avec le couvercle 3' plan qui lui est lié. Un manche 14 est vissé au couvercle 3' et l'appareil est donc une sonde qui peut être plongée dans le liquide à mesurer. Le reste de la description précédente s'applique tel quel à cette réalisation, et le mode de mesure reste le même.

Le transducteur d'émission 5 est utilisé pour émettre une onde ultrasonore d'une fréquence de 5 mégahertz environ dont l'énergie est ensuite partagée en plusieurs ondes au gré des réflexions partielles subies aux interfaces 12 et 13. On appelle A0 l'onde réfléchie vers le transducteur d'émission 5 à l'interface 12 entre la cavité 9 et la pastille 8, A1 l'onde réfléchie vers le transducteur d'émission 5 à l'interface 13 entre la cavité 9 et le couvercle 3, A2 l'onde directe, qui atteint le transducteur de réception 6 sans avoir été réfléchie et A3 l'onde qui atteint le transducteur de réception 6 après avoir été réfléchie une fois à chacune des interfaces 12 et 13 et avoir donc traversé trois fois la cavité 9.

Les intensités des ondes A0 à A3 sont données par les formules (1) à (4).

$$A_0 = t'r_{34}t''e^{-2\alpha_3 x_3} \tag{1}$$

$$A_1 = t't_{34}r_{45}t_{43}t''e^{(-2\alpha_3 x_3)}e^{(-2\alpha x)} \tag{2}$$

$$A_2 = t't_{34}t_{45}t_t e^{(-\alpha_3 x_3)}e^{(-\alpha x)}e^{(-\alpha_5 x_5)} \tag{3}$$

$$A_3 = t't_{34}r_{45}r_{43}t_{45}t_t e^{(-\alpha_3 x_3)}e^{(-3\alpha x)}e^{(-\alpha_5 x_5)} \tag{4}$$

Les coefficients sont définis comme voici :

$\alpha$ :     coefficient d'atténuation de l'onde dans la cavité 9,

$\alpha_3$ :     coefficient d'atténuation de l'onde dans la pastille 8,

$\alpha_5$ :     coefficient d'atténuation de l'onde dans le couvercle 3,

$x$ :     profondeur de la cavité 9,

$x_3$ :     épaisseur de la pastille 8,

$x_5$ :     : épaisseur du couvercle 3 entre l'interface 13 et le transducteur de réception 6,

$r_{34}$ :     coefficient de réflexion de la pastille 8 sur la cavité 9,

$r_{45}$ :     coefficient de réflexion de la cavité 9 sur le couvercle 3,

$r_{43}$ :     coefficient de réflexion de la cavité 9 sur la pastille 8,

$t'$ :     coefficient de transmission d'onde du transducteur d'émission 5 à la pastille 8,

$t''$ :     coefficient de transmission d'onde de la pastille 8 au transducteur d'émission 5,

$t_{34}$ :     coefficient de transmission d'onde de la pastille 8 à la cavité 9,

$t_{43}$ :     coefficient de transmission d'onde de la cavité 9 à la pastille 8,

$t_{45}$ :     coefficient de transmission d'onde de la cavité 9 au couvercle 3,

$t_t$ :     coefficient de transmission d'onde du couvercle 3 au transducteur de réception 6.

L'impédance acoustique Z4 du produit dont les caractéristiques doivent être mesurées et qui emplit la cavité 9 (ou 9') est donnée par la formule (5) où m a la définition de la formule (6), Z3 étant l'impédance acoustique connue de la pastille 8.

$$Z4 = Z3 \left[ \left(1 + \frac{2}{m}\right) - \sqrt{\left(2 + \frac{2}{m}\right)\frac{2}{m}} \right] \tag{5}$$

$$m = \frac{A1/A0}{A3/A2} \tag{6}$$

La formule (7) suivante donne l'atténuation acoustique dans le corps à mesurer, et la formule (8) sa masse volumique en fonction de la vitesse de propagation C4 des ondes dans la cavité 9, qui peut être calculée très facilement en mesurant le retard de l'onde A3 sur l'onde A2 ou de l'onde A1 sur l'onde A0.

$$\alpha = \frac{1}{2x} \ln \left[ \left(\frac{Z4-Z5}{Z4+Z5}\right)\left(\frac{Z4-Z3}{Z4+Z3}\right)\frac{A3}{A2} \right] \tag{7}$$

$$\rho 4 = \frac{Z4}{C4} \qquad \qquad (8)$$

Il est avantageux que m soit proche de 1 pour obtenir une meilleure précision. En conséquence, un matériau avantageux en combinaison à un liquide aqueux est le magnésium, pour lequel m=0,783 ; d'autres matériaux légers conviennent assez bien.

L'invention peut aisément et avantageusement trouver emploi pour des mesures sur des résines en cours de polymérisation à différentes températures, sur des solvants et d'une façon générale sur des liquides de toute nature et éventuellement des liquides coûteux, dont l'appareil de la première réalisation permet de ne se servir que d'une très petite quantité.

Les calculs précédents montrent que l'invention permet d'éliminer la plupart des paramètres traduisant l'influence des composants de l'appareil, puisque l'on ne retient plus que l'impédance acoustique Z3 de la pastille 8 de référence et l'épaisseur x de la cavité 9. Par ailleurs, l'étalonnage des transducteurs 5 et 6 est inutile car les formules de calcul utilisent seulement le rapport A1/A0 des signaux reçus par le transducteur 5 et la rapport A3/A2 des signaux reçus par le transducteur 6.

**Revendications**

1. Appareil de mesure de caractéristiques d'un liquide, ledit appareil comportant une paire de transducteurs acoustiques (5, 6) montés en opposition, l'un au moins des transducteurs étant émetteur-récepteur, et un assemblage composé d'une couche (8) d'un premier matériau solide devant un des transducteurs (5), d'une couche (3) d'un second matériau solide devant l'autre transducteur (6) et d'une cavité (9) emplie du liquide de mesure entre les deux couches, caractérisé en ce que l'une des couches est formée par une pastille (8) logée dans un boîtier (1) délimitant la cavité (9) et dont l'autre couche fait partie.

2. Appareil de mesure selon la revendication 1, caractérisé en ce que les transducteurs (5, 6) sont encastrés dans le boîtier (1).

3. Appareil de mesure suivant l'une quelconque des revendications 1 ou 2, caractérisé en ce que la couche en contact avec le transducteur émetteur-récepteur est en matériau léger, par exemple en magnésium.

4. Procédé de mesure de caractéristiques d'un matériau par un appareil conforme à l'une quelconque des revendications précédentes, consistant à émettre une onde acoustique par un des transducteurs (5) émetteur-récepteur, à recueillir et mesurer par ledit transducteur (5) la réflexion d'onde (A0) réfléchie à l'interface (12) entre la cavité (9) et la couche (5) et par l'autre transducteur (6) l'onde directe (A2), caractérisé en ce qu'il consiste en plus à recueillir et à mesurer par ledit transducteur (5) la réflexion d'onde (A1) réfléchie à l'interface (13), et à recueillir et à mesurer par l'autre transducteur (6) l'onde (A3) réfléchie une fois sur chacune des interfaces (12, 13).

**Patentansprüche**

1. Meßvorrichtung zur Messung von Eigenschaften einer Flüssigkeit

   mit einem Paar von akustischen Wandlern (5, 6), die einander gegenüberliegend montiert sind, wobei wenigstens einer dieser Wandler ein Sender-Empfänger ist,
   sowie mit einer Anordnung, bestehend aus einer Schicht (8) aus einem ersten festen Material vor einem der Wandler (5), einer Schicht (3) aus einem zweiten festen Material vor dem anderen Wandler (6) und einem mit der Meßflüssigkeit gefüllten Hohlraum (9) zwischen den beiden Schichten,

   **dadurch gekennzeichnet,**
   daß eine der Schichten von einem Plättchen (8) gebildet wird, das in einem den Hohlraum (9) begrenzenden Gehäuse (1) angeordnet ist, von dem die andere Schicht ein Bestandteil ist.

2. Meßvorrichtung nach Anspruch 1,
   dadurch gekennzeichnet,
   daß die Wandler (5, 6) in das Gehäuse (1) eingelassen sind.

3. Meßvorrichtung nach Anspruch einem der Ansprüche 1 oder 2,
    dadurch gekennzeichnet,
    daß die Schicht, die mit dem als Sender-Empfänger ausgebildeten Wandler in Kontakt steht, aus einem leichten Material, z. B aus Magnesium, besteht.

4. Verfahren zur Messung von Eigenschaften eines Materials mittels einer Vorrichtung nach einem der vorhergehenden Ansprüche mit den Verfahrensschritten:

   Aussenden einer akustischen Welle durch einen der Wandler (5), der als Sender-Empfänger ausgebildet ist, Empfangen und Messen der an der Grenzfläche (12) zwischen dem Hohlraum (9) und der Schicht (8) reflektierten Welle (A0) mittels des genannten Wandlers (5) und der direkten Welle (A2) mittels des anderen Wandlers (6),

   **gekennzeichnet durch** folgende weiteren Verfahrensschritte:

   Empfangen und Messen der an der Grenzfläche (13) reflektierten Welle (A1) mittels des genannten Wandlers (5) und
   Empfangen und Messen der an jeder der Grenzflächen (12, 13) einmal reflektierten Welle (A3) mittels des anderen Wandlers (6).

## Claims

1. An apparatus for measuring characteristics of a liquid and comprising a pair of acoustic transducers (5, 6) disposed opposite one another, at least one of the transducers being a transceiver, and an assembly consisting of a layer (8) of a first solid material in front of one (5) of the transducers, a layer (3) of a second solid material in front of the other transducer (6) and a cavity (9) filled with the test liquid between the two layers, characterised in that one of the layers consists of a pellet (8) received in a casing (1) which bounds the cavity (9) and of which the other layer forms part.

2. An apparatus device according to claim 1,
   characterised in that the transducers (5, 6) are embedded in the casing (1).

3. An apparatus according to either of claims 1 or 2,
   characterised in that the layer in contact with the transceiver transducer consists of a light material, for example, magnesium.

4. A process for measuring characteristics of a material by apparatus according to any of the previous claims, comprising transmitting an acoustic wave from the transceiver transducer (5), using the said transceiver transducer (5) to collect and measure the reflection (A0) of the wave from the interface (12) between the cavity (9) and the layer (8), and using the other transducer (6) to collect and measure the direct wave (A2), characterised in that it also comprises using the transceiver transducer (5) to collect and measure the wave (A1) reflected at the interface (13), and using the other transducer (6) to collect and measure the wave (A3) reflected once from each of the interfaces (12, 13).

FIG. 1

FIG. 2